# FASCICULE DE BREVET EUROPEEN

(11) **EP 2 454 777 B1**
(45) Date de publication et mention de la délivrance du brevet: **08.10.2014**
(21) Numéro de dépôt: 10734188.5
(22) Date de dépôt: 01.07.2010
(51) Int. Cl.: H01M 10/0525, H01M 10/0569, H01M 4/485, H01M 4/58

(54) **ELECTROLYTE LIQUIDE POUR ACCUMULATEUR AU LITHIUM, COMPRENANT UN MELANGE DE SOLVANTS ORGANIQUES NON AQUEUX**
FLÜSSIGER ELEKTROLYT FÜR LITHIUM-AKKUMULATOR, ENTHALTEND EINE MISCHUNG VON NICHTWÄSSRIGEN, ORGANISCHEN LÖSUNGSMITTELN
LIQUID ELECTROLYTE FOR LITHIUM ACCUMULATOR, COMPRISING A MIXTURE OF NON-AQUEOUS ORGANIC SOLVENTS

(30) Priorité: 16.07.2009 FR 0903490
(43) Date de publication de la demande: 23.05.2012
(73) Titulaire: Commissariat à l'Énergie Atomique et aux Énergies Alternatives, 75015 Paris (FR)
(72) Inventeur: JOUANNEAU-SI LARBI, Séverine, F-38590 Sillans (FR); DANIEL, Lise, F-38160 Saint Marcellin (FR); MASSE, Florence, F-38100 Grenoble (FR)
(74) Mandataire: Gris, Sébastien
(86) Numéro de dépôt international: PCT/FR2010/000484
(87) Numéro de publication internationale: WO 2011/007056

(56) Documents cités:
- EP-A1- 0 482 287
- EP-A1- 0 766 332
- EP-A1- 1 675 209
- JP-A- 8 195 221
- US-A- 5 484 669
- US-A1- 2006 154 149
- US-B1- 6 541 162
- S. HERREYRE ET AL: "New Li-ion electrolytes for low temperature applications" JOURNAL OF POWER SOURCES, vol. 97-98, 1 juillet 2001 (2001-07-01), pages 576-580, XP004254575 ISSN: 0378-7753
- M.C. SMART ET AL.: "Use of Organic Esters as Cosolvents in Electrolytes for Lithium-Ion Batteries with Improved Low Temperature Performance" JOURNAL OF THE ELECTROCHEMICAL SOCIETY, vol. 149, no. 4, 19 février 2002 (2002-02-19), pages A361-A370, XP002569875 DOI: 10.1149/1.1453407

## Description

### Domaine technique de l'invention

L'invention concerne un électrolyte liquide pour accumulateur au lithium comprenant au moins un sel de lithium dissous dans un mélange de trois solvants organiques non aqueux.

### État de la technique

Les accumulateurs au lithium ont tendance à remplacer des accumulateurs nickel-cadmium (Ni-Cd) ou nickel-hydrure métallique (Ni-MH) comme source d'énergie autonome, en particulier dans les équipements portables. En effet, les performances, et plus particulièrement les densités d'énergie massique et volumique, des accumulateurs au lithium, tels que les accumulateurs de type lithium-ion (Li-Ion), sont supérieures à celles des accumulateurs Ni-Cd et Ni-MH.

Ces accumulateurs au lithium fonctionnent sur le principe d'insertion ou de désinsertion (ou intercalation-désintercalation) du lithium dans au moins le matériau actif de l'électrode positive. En général, le matériau actif de l'électrode positive est un oxyde de lithium et d'au moins un métal de transition, tel que LiCoO₂, LiNiO₂ et LiMn₂O₄. Plus récemment, il a été proposé d'utiliser le composé LiFePO₄ comme matériau actif pour l'électrode positive.

De plus, le matériau actif de l'électrode négative peut être soit du lithium métallique ou un alliage à base de lithium (accumulateur de type Li-Métal), soit, comme pour le matériau actif de l'électrode positive, un matériau apte à insérer et désinsérer des ions Li⁺ (accumulateur de type Li-Ion).

Pour un accumulateur Li-Ion, le matériau actif de l'électrode négative est, en général, à base de matériau carboné, tel que du graphite.

D'autres matériaux peuvent également être envisagés pour former le matériau actif de l'électrode négative.

À titre d'exemple et comme mentionné dans la demande internationale WO-A-2006/027449, un oxyde mixte de titane et de lithium, du type Li₄Ti₅O₁₂, peut aussi être employé comme matériau actif d'une électrode négative d'un accumulateur Li-Ion.

Enfin, l'électrolyte peut être un électrolyte liquide imprégnant un séparateur disposé entre les électrodes positive et négative. Dans ce cas, l'électrolyte liquide comporte, en général, un sel de lithium dissous dans un ou plusieurs solvants organiques non aqueux, en particulier de la famille des carbonates.

Le type d'électrolyte utilisé est un facteur important dans la performance des accumulateurs au lithium, en particulier lorsque ceux-ci sont utilisés à des températures très basses ou très élevées.

À titre d'exemple, le brevet US6541162 décrit un électrolyte pour un accumulateur au lithium comprenant un sel de lithium dissous dans un mélange de trois solvants organiques non aqueux. Le mélange comprend plus particulièrement :
- entre 20 et 70% en volume d'un carbonate cyclique, tel que le carbonate éthylène (connu sous l'acronyme anglo-saxon EC) et le carbonate propylène (connu sous l'acronyme anglo-saxon PC),
- entre 20 et 70% en volume d'un carbonate linéaire, tel que le carbonate de diméthyle (connu sous l'acronyme anglo-saxon DMC), le carbonate de diéthyle (connu sous l'acronyme anglo-saxon DEC), le carbonate d'éthyle et de méthyle et le carbonate de méthyle et de propyle
- et entre 40 et 60% en volume d'un acétate d'alkyle, tel que l'acétate de n-méthyle (connu sous l'acronyme anglo-saxon MA), l'acétate de n-éthyle (connu sous l'acronyme anglo-saxon EA) et l'acétate de n-propyle (connu sous l'acronyme anglo-saxon PA).

Le brevet US6541162 a, plus particulièrement, testé les performances, notamment la capacité pendant la décharge à un régime de 0,2C et à -20°C, d'un accumulateur au lithium comprenant LiCoO₂ ou un dérivé comme matériau actif de l'électrode positive, un composé à base de carbone pour le matériau actif de l'électrode négative et avec les mélanges de solvants suivants : EC/DEC/PA (3 :3 :4), EC/EMC/PA (3 :3 :4), EC/DMC/PA (3 :3 :4), EC/DMC/MA (3 :3 :4) et EC/DMC/EA (3 :3 :4).

Dans la demande de brevet EP0482287, un accumulateur au lithium comporte un oxyde complexe avec du lithium pour le matériau actif de l'électrode positive, un matériau à base de carbone pour l'électrode négative et un électrolyte non aqueux formé par un sel inorganique dissous dans un mélange comprenant un ester cyclique et un solvant additionnel, avec un rapport volumique entre le solvant additionnel et l'ester cyclique de 1 pour 4. L'ester cyclique est au moins un ester cyclique sélectionné parmi le groupe constitué par le carbonate d'éthylène, le carbonate de propylène, le carbonate de butylène et le γ-butyrolactone et le solvant additionnel est au moins un solvant choisi parmi le carbonate de diéthyle, le carbonate de diéthyle, le carbonate de méthyle, le formate d'éthyle, l'acétate d'éthyle, l'acétate de méthyle et le sulfoxyde de diméthyle. Les accumulateurs au lithium testés dans la demande de brevet EP0482287 comprennent tous un électrolyte liquide formé avec un mélange de solvants EC/DEC.

Dans l'article "Journal of Power Sources, vol. 97-98, 1 er juillet 2001, pages 576-580", de nouvelles compositions électrolytiques pour batteries lithium-ion sont décrites, en particulier des mélanges ternaires de solvants non-aqueux comprenant (i) un carbonate cyclique, tel que le carbonate d'éthylène (EC) ou le carbonate de propylène (PC), (ii) un carbonate linéaire, tel que le carbonate de diméthyle (DMC) ou le carbonate de diéthyle (DEC), et (iii) un ester linéaire, tel que l'acétate d'éthyle (EA) ou le butyrate de méthyle (MB), les trois composants étant présents dans des proportions égales.

US 5 484 669 divulgue un électrolyte non-aqueux pour accumulateur secondaire dont le solvant consiste en un mélange d'un carboxylate aliphatique de formule RCOOR' (dans lequel R représente un groupement alkyle avec au moins 3 atomes de carbone et R' un groupement alkyle avec au moins 2 atomes de carbone) dans une proportion de 10 à 40 % en volume, d'un carbonate cyclique dans une proportion de 30 à 60 % en volume et d'un carbonate linéaire dans une proportion de 30 à 60 % en volume.

EP 1 675 209 divulgue un mélange de solvants pour électrolyte d'accumulateur lithium, lequel mélange comprend 50 à 95 % en volume, par rapport au volume dudit mélange, d'un ester linéaire d'un acide saturé en C2 à C8, et 5 à 50 % en volume d'un carbonate cyclique saturé en C3 à C6 et d'un carbonate linéaire saturé en C3 à C6, l'un seulement des deux carbonates étant substitué par au moins un atome d'halogène.

US 2006/154149 divulgue une batterie secondaire au lithium comprenant un électrolyte organique constitué d'un mélange de solvants comprenant un carbonate cyclique tel que EC ou PC, un carbonate linéaire tel que le carbonate de diméthyle (DMC), le carbonate de diéthyle (DEC), le carbonate d'éthyle et de méthyle (EMC) ou le carbonate de méthyle et de propyle (MPC), et un ester linéaire tel que l'acétate de méthyle (MA) ou d'éthyle (EA).

L'article "Journal of the Electrochemical Society, vol. 149, no. 4, 19 février 2002, pages A361-A370" décrit l'utilisation d'esters organiques comme co-solvants au sein d'électrolytes pour batteries lithium-ion, et notamment l'ajout d'esters aliphatiques comme l'acétate de méthyle (MA), l'acétate d'éthyle (EA), le propionate d'éthyle (EP) et le butyrate d'éthyle (EB), à des compositions standards de carbonates cycliques et linéaires.

EP 0 766 332 divulgue un électrolyte non-aqueux pour batterie secondaire au lithium comprenant un sel de lithium tel que LiBF₄, LiPF₆ ou LiAsF₆ dissous dans un mélange constitué de (i) 50 à 60 % en volume d'un mélange de carbonate cyclique et d'ester cyclique, (ii) 20 à 40 % en volume d'un carbonate linéaire et (iii) 10 à 25 % en volume d'un ester linéaire.

JP 08 195221 divulgue un électrolyte pour batterie secondaire au lithium contenant un mélange EC/PC/DEC ou EC/PC/DMC ou EC/PC/DME (DME représentant le diméthoxyéthane) auquel on a ajouté 50 % en volume (ou moins) d'un ester acétique tel que l'acétate de méthyle (MA) ou de n-propyle (PA).

### Objet de l'invention

L'invention a pour but de proposer un nouvel électrolyte liquide pour accumulateur au lithium et, plus particulièrement adapté à un accumulateur au lithium comprenant LiFePO₄ et un oxyde de titane éventuellement lithié (par exemple Li₄Ti₅O₁₂) ou l'un de leurs dérivés, pour former les matériaux actifs respectifs des électrodes positive et négative.

Selon l'invention, ce but est atteint par un électrolyte liquide pour accumulateur au lithium comprenant au moins un sel de lithium dissous dans un mélange de trois solvants organiques non aqueux, caractérisé en ce que le mélange est constitué :
- de 33% à 49% en volume de carbonate de propylène,
- de 33% à 49% en volume de carbonate de diéthyle
- et de 2% à 34% en volume d'acétate d'éthyle.

L'invention a également pour but de proposer un accumulateur au lithium comprenant le couple de matériaux actifs LiFePO₄ (ou un de ses dérivés)/oxyde de titane éventuellement lithié (ou un dérivé), pour les électrodes positive et négative, fonctionnant en puissance dans une large gamme de température tout en conservant une aptitude à l'autodécharge faible et comparable à celles obtenues avec des électrolytes standards.

Ce but est également atteint par un accumulateur au lithium comportant
- une électrode positive comprenant LiFePO₄ ou un de ses dérivés comme matériau actif positif,
- une électrode négative comprenant un oxyde de titane ou un dérivé comme matériau actif négatif,
- et un séparateur disposé entre les électrodes positive et négative et imbibé d'un électrolyte liquide tel que celui mentionné ci-dessus.

### Description sommaire des dessins :

D'autres avantages et caractéristiques ressortiront plus clairement de la description qui va suivre de modes particuliers de réalisation de l'invention donnés à titre d'exemples non limitatifs.

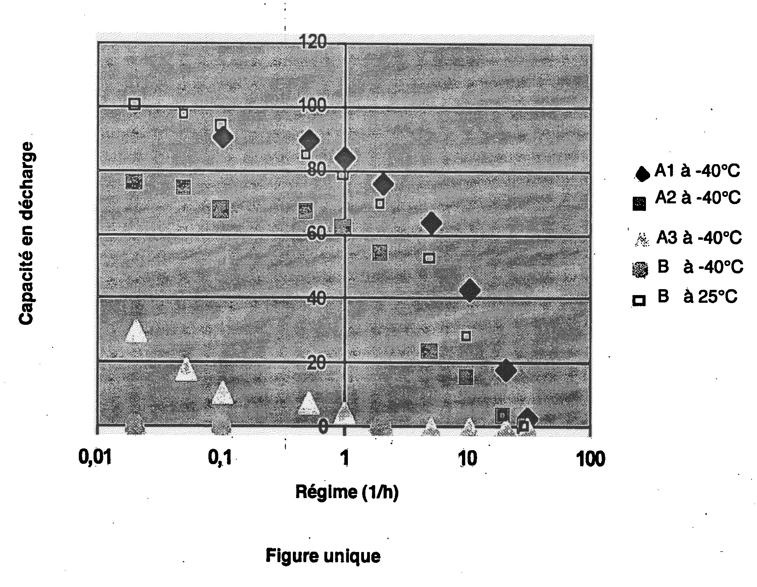

La figure unique annexée représente la variation de la capacité en décharge en fonction du régime des accumulateurs A1, A2, A3 et B à -40°C et dé l'accumulateur B à 25°C.

### Description de modes particuliers de réalisation

Trois solvants organiques non aqueux particuliers, ainsi que leurs proportions volumiques respectives, ont été choisis pour former le mélange de solvants d'un électrolyte liquide pour accumulateur au lithium.

En particulier, les solvants choisis pour former le mélange sont : .
- le carbonate de propylène, également connu sous l'acronyme anglo-saxon PC,
- le carbonate de diéthyle, également connu sous l'acronyme anglo-saxon DEC
- et l'acétate d'éthyle, également connu sous l'acronyme anglo-saxon EA.

De plus, les proportions volumiques respectives de ces trois solvants dans le mélange sont les suivantes :
- entre 33% à 49% en volume pour PC,
- entre 33% à 49% en volume pour DEC
- et entre 2% à 34% en volume pour EA.

La somme des proportions volumiques respectives d'EA, de PC et de DEC permet d'atteindre 100%. Ainsi, le mélange ne comporte pas d'autre(s) solvant(s) que les trois solvants PC, DEC et EA. Plus particulièrement, il ne comporte pas de carbonate d'éthylène (EC) comme dans les exemples de mélanges de solvants divulgués selon l'art antérieur.

De plus, la proportion volumique d'EA dans le mélange de solvants est avantageusement comprise entre environ 5% et environ 33% et encore avantageusement entre environ 10% et environ 33%.

Un tel mélange de solvants est, plus particulièrement, utilisé pour dissoudre au moins un sel de lithium, par exemple choisi parmi LiClO₄, LiAsF₆, LiPF₆, LiBF₄, LiR_{F}SO₃, LiCH₃SO₃, LiN(R_{F}SO₂)₂ et LiC(R_{F}SO₂)₃. R_{F} est, en particulier, un groupement perfluoro-alkyle comprenant entre 1 à 8 atomes de carbone ou bien un atome de fluor.

Le mélange de solvants, formé de 33% à 49% en volume de PC, de 33% à 49% en volume de DEC et de 2% à 34% en volume d'EA et comprenant au moins le sel de lithium dissous forme alors un électrolyte liquide particulièrement adapté à un accumulateur au lithium comprenant le couple de matériaux actifs LiFePO₄/ Li₄Ti₅O₁₂.

En effet, il a été trouvé qu'un tel électrolyte associé au couple de matériaux actifs LiFePO₄/Li₄Ti₅O₁₂ permet de réaliser un accumulateur au lithium délivrant une puissance élevée à des régimes de courant élevés, tout en ayant une faible autodécharge dans une large gamme de température, notamment pour des températures extrêmement faibles et extrêmement élevées. Par autodécharge, on entend l'aptitude d'un accumulateur placé à l'état chargé à se décharger, même lorsqu'il n'est pas utilisé ou « sur étagère ».

À titre d'illustration, trois séries d'accumulateurs Li-Ion, respectivement appelées A1, A2, A3 et ne différant que par le mélange de solvants PC :DEC :EA utilisé pour former l'électrolyte liquide (mélanges respectivement notés a1, a2 et a3), ont été réalisées.

Les mélanges a1, a2 et a3 sont tous constitués de PC, de DEC et d'EA, mais dans des proportions volumiques différentes, tel qu'indiqué dans le tableau 1 ci-dessous :

**Tableau 1**

| | **a1** | **a2** | **a3** |
|---|---|---|---|
| **PC :DEC :EA** | 1 :1 :1 | 3:3:1 | 7:7 :1 |

Les séries d'accumulateurs A1, A2 et A3 comprennent chacune LiFePO₄/Li₄Ti₅O₁₂ comme couple de matériaux actifs respectifs pour les électrodes positive et négative.

En particulier, chaque électrode est formée en déposant sur un collecteur de courant en aluminium, le mélange suivant :
- 80% en masse de matériau actif (LiFePO₄ pour l'électrode positive et Li₄Ti₅O₁₂ pour l'électrode négative),
- de 8% en masse de noir de carbone utilisé comme matériau conducteur
- et de 12% en masse d'hexafluorure de polyvinylidène comme liant.

Avec des électrodes ayant une surface de l'ordre de 6cm² et une capacité surfacique de l'ordre de 1mAh/cm², les accumulateurs au lithium peuvent avantageusement délivrer une capacité de l'ordre de 6mAh/cm².

De plus, 1 M de LiPF₆ est utilisée comme sel de lithium dissous dans les mélanges a1, a2 et a3, pour former l'électrolyte liquide. Celui-ci imbibe un séparateur disposé entre les électrodes positive et négative. Le séparateur est plus particulièrement un séparateur de type Celgard®.

À titre de comparaison, une quatrième série d'accumulateurs Li-Ion, appelée B, est également réalisée. Comparée aux séries A1, A2 et A3, la série B ne diffère que par le mélange de solvants utilisé (mélange b). Le mélange b est constitué de carbonate d'éthylène (EC) et de carbonate de diéthyle (DEC), dans les proportions volumiques 1 :1.

Un premier test est réalisé avec ces 4 séries d'accumulateurs au lithium, afin d'évaluer leur autodécharge.

Ce test consiste d'abord à charger les accumulateurs au lithium en réalisant quelques cycles à régime relativement lent. Puis, les accumulateurs ainsi chargés sont stockés à 40°C, afin de les placer dans des conditions de vieillissement accéléré. La capacité restituée en décharge pour chaque accumulateur A1, A2, A3 et B est alors contrôlée au bout de 14 jours de stockage à 40°C, ce qui permet d'évaluer l'autodécharge de l'accumulateur au lithium. Le tableau 2 ci-dessous montre, plus particulièrement, le protocole de mesure de l'autodécharge réalisé lors de ce premier test.

**Tableau 2**

| **Etape** | **Température** | **Régime** | **Observations** |
|---|---|---|---|
| **1** | 25°C | C/5 | 1 charge à 2,6V et 1 décharge à 1V |
| **2** | 25°C | C/5 | 1 charge jusqu'à 2,6V |
| **3** | 40°C | 0 | Suivi de la tension en circuit ouvert (OCV) |
| **4** | 25°C | C/5 | 1 décharge jusqu'à 1 V pour évaluer l'autodécharge puis retour à l'étape 3 |

Les capacités restituées de stockage de chaque accumulateur A1, A2 A3 et B sont reportées dans le tableau 3 ci-dessous. Ces capacités restituées correspondent au pourcentage de capacité d'un accumulateur après 14 jours de stockage à -40°C par rapport à la capacité initiale dudit accumulateur à 25°C, à un régime C/10.

**Tableau 3**

| | **A1** | **A2** | **A3** | **B** |
|---|---|---|---|---|
| **Capacité restituée de stockage** | 92 | 91 | 90,5 | 91 |

Comme cela est indiqué dans le tableau 3, l'autodécharge pour les accumulateurs A1, A2 et A3 est comparable à celle de l'accumulateur B. Dans tous les cas, elle reste faible.

Un deuxième test est réalisé avec les 4 séries d'accumulateurs au lithium A1, A2, A3 et B, afin d'évaluer leur comportement lorsqu'ils subissent une décharge multiple à des régimes de puissance successifs:

Le tableau 4 ci-dessous indique les différents régimes de puissance appliqués aux accumulateurs.

**Tableau 4**

| **Etape** | **T°** | **Régime** | **Observations** |
|---|---|---|---|
| 1 | 25°C | C/5 | 1 cycle de référence (charge à 2,6V + décharge à 1V)) |
| 2 | 25°C | C/5 | 1 charge jusqu'à 2,6V |
| 3 | -40°C | Courants successifs de 30C jusqu'à C/50, entrecoupés de relaxation de 1/2h | 1 décharge multiple jusqu'à 1V |

Ainsi, comme représenté sur la figure annexée, on constate que l'accumulateur B, qui présente un comportement intéressant à 25°C, perd sa capacité résiduelle (% de la capacité par rapport à la capacité initiale à 25°C) à -40°C. Par contre, le comportement face à une décharge multiple des accumulateurs au lithium A1 à A3, à -40°C, est amélioré par rapport à celui de l'accumulateur B à -40°C. De plus, le comportement des accumulateurs A1 et A2, à -40°C est sensiblement comparable à celui de l'accumulateur au lithium B à 25°C.

Un troisième test est réalisé avec les séries d'accumulateurs au lithium A1 et B, afin d'évaluer leur comportement lorsqu'ils subissent des impulsions de courant de durée variable et pour différentes températures externes.

Ce troisième test a donc été réalisé avec un courant d'impulsion Cₚ de 10C, avec deux durées d'impulsion (Tₚ) respectivement de 300ms (Impulsion n°1) et de 1000ms (Impulsion n°2) et pour différentes températures externes.

Les résultats sont rapportés dans le tableau 5 ci-dessous. Le signe « / » signifie que le test n'a pas été réalisé dans ce cas spécifique tandis que les signes « + » et « -» correspondent respectivement à l'obtention ou non d'une réponse de l'accumulateur à l'impulsion de courant donnée.

**Tableau 5**

| **T°** | **Accumulateur** | **Impulsion** | **Réponse** |
|---|---|---|---|
| 90°C | B | N°1 | / |
| | | N°2 | / |
| | A1 | N°1 | + |
| | | N°2 | + |
| 80°C | B | N°1 | + |
| | | N°2 | + |
| | A1 | N°1 | + |
| | | N°2 | + |
| 55°C | B | N°1 | + |
| | | N°2 | + |
| | A1 | N°1 | / |
| | | N°2 | /1 |
| 25°C | B | N°1 | + |
| | | N°2 | + |
| | A1 | N°1 | + |
| | | N°2 | + |
| -20°C | B | N°1 | + |
| | | N°2 | + |
| | A1 | N°1 | / |
| | | N°2 | / |
| -30°C | B | N°1 | - |
| | | N°2 | - |
| | A1 | N°1 | + |
| | | N°2 | + |
| -40°C | B | N°1 | / |
| | | N°2 | / |
| | A1 | N°1 | + |
| | | N°2 | + |

Ainsi, les résultats rapportés dans le tableau 5 montrent que l'accumulateur A1 permet d'obtenir une réponse pour les deux durées d'impulsion de courant et ce quelle que soit la température externe. Ce n'est pas le cas de l'accumulateur B puisqu'il n'y a pas de réponse à -30°C.

Enfin, l'accumulateur au lithium selon l'invention n'est pas limité aux modes particuliers de réalisation exposés ci-dessus. Plus particulièrement, l'électrolyte liquide comprenant le mélange de 3 solvants PC/DEC/EA peut être associé des matériaux actifs pour les électrodes positive et négative formés par des dérivés de LiFePO₄ et de Li₄Ti₅O₁₂. Ainsi, LiFePO₄ peut par exemple être remplacé par un de ses dérivés, tel que LiFeMPO₄, avec M choisi parmi au moins Co, Ni et Mn. De même, Li₄Ti₅O₁₂ peut être remplacé par un autre oxyde de titane lithié ou bien par un de ses dérivés, tel qu'un composé Li₄Ti₅O₁₂ dans lequel le titane est partiellement substitué par un élément de transition ou par un alcalino-terreux. Enfn, l'oxyde de titane formant le matériau actif négatif peut aussi être un oxyde de titane non lithié, tel que TiO₂.

## Revendications

1. Electrolyte liquide pour accumulateur au lithium comprenant au moins un sel de lithium dissous dans un mélange de trois solvants organiques non aqueux, **caractérisé en ce que** le mélange est constitué :
- de 33% à 49% en volume de carbonate de propylène,
- de 33% à 49% en volume de carbonate de diéthyle
- et de 2% à 34% en volume d'acétate d'éthyle.

2. Electrolyte selon la revendication 1, **caractérisé en ce que** le mélange contient entre environ 10% et environ 33% en volume d'acétate d'éthyle.

3. Electrolyte selon la revendication 1, **caractérisé en ce que** les proportions volumiques respectives de carbonate de propylène, de carbonate de diéthyle et d'acétate d'éthyle dans le mélange sont de 1 :1 :1.

4. Electrolyte selon la revendication 1, **caractérisé en ce que** les proportions volumiques respectives de carbonate de propylène, de carbonate de diéthyle et d'acétate d'éthyle dans le mélange sont de 3 :3 :1.

5. Electrolyte selon la revendication 1, **caractérisé en ce que** les proportions volumiques respectives de carbonate de propylène, de carbonate de diéthyle et d'acétate d'éthyle dans le mélange sont de 7 :7 :1.

6. Electrolyte selon l'une quelconque des revendications 1 à 5, **caractérisé en ce que** le sel de lithium est choisi parmi LiClO₄, LiAsF₆, LiPF₆, LiBF₄, LiR_{F}SO₃, LiCH₃SO₃, LiN(R_{F}SO₂)₂ et LiC(R_{F}SO₂)₃, R_{F} étant un groupement perfluoro-alkyle comprenant entre 1 à 8 atomes de carbone ou un atome de fluor.

7. Accumulateur au lithium **caractérisé en ce qu'**il comporte :
- une électrode positive comprenant LiFePO₄ ou un de ses dérivés comme matériau actif positif,
- une électrode négative comprenant un oxyde de titane ou un de ses dérivés comme matériau actif négatif,
- et un séparateur disposé entre les électrodes positive et négative et imbibé d'un électrolyte liquide selon l'une quelconque des revendications 1 à 6.

8. Accumulateur au lithium selon la revendication 7, **caractérisé en ce que** l'oxyde de titane est un oxyde de titane lithié.

9. Accumulateur au lithium selon la revendication 8, **caractérisé en ce que** l'oxyde de titane est Li₄Ti₅O₁₂.

## Patentansprüche

1. Flüssiger Elektrolyt für einen Lithium-Akkumulator, umfassend wenigstens ein Lithiumsalz, das in einem Gemisch aus drei nichtwässrigen organischen Lösungsmitteln gelöst ist, **dadurch gekennzeichnet, dass** das Gemisch besteht aus:
- 33 bis 49 Vor.-% Propylencarbonat,
- 33 bis 49 Vol.-% Diethylcarbonat und aus
- 2 bis 34 Vol.-% Ethylacetat.

2. Elektrolyt nach Anspruch 1, **dadurch gekennzeichnet, dass** das Gemisch zwischen etwa 10 und etwa 33 Vol.-% Ethylacetat enthält.

3. Elektrolyt nach Anspruch 1, dadurch gekenntzeichnet, dass die jeweiligen Volumenverhältnisse von Propylencarbonat, von Diethylcarbonat und von Ethylacetat in dem Gemisch 1 : 1 : 1 beitragen.

4. Elektrolyt nach Anspruch 1, **dadurch gekennzeichnet, dass** die jeweiligen Volumenverhältnisse von Propylencarbonat, von Dimethylcarbonat und von Ethylacetat in dem Gemisch 3 : 3 : 1 betragen.

5. Elektrolyt nach Anspruch 1, **dadurch gekennzeichnet, dass** die jeweiligen Volumenverhältnisse von Propylencarbonat, von Dimethylcarbonat und von Ethylacetat in dem Gemisch 7 : 7 : 1 betragen

6. Elektrolyt nach einem der Ansprüche 1 bis 5, **dadurch gekennzeichnet, dass** das Lithiumsalz aus LiClO₄, LiAsF₆, LiPF₆, LiBF₄, LiR_{F}SO₃, LiCH₃SO₃, LiN(R_{F}SO₂)₂ und LiC(R_{F}SO₂)₃ ausgewählt ist, wobei R_{F} eine Perfluoralkylgruppe mit 1 bis 8 Kohlenstoffatomen oder ein Fluoratom ist.

7. Lithium-Akkumulator, **dadurch gekennzeichnet, dass** er umfasst:
- eine positive Elektrode, die LiFePO₄ oder eines seiner Derivate als positives aktives Material umfasst,
- eine negative Elektrode, die ein Titanoxid oder eines seiner Derivate als negatives aktives Material umfasst, und
- einen Separator, der zwischen der positiven und der negativen Elektrode angeordnet ist und mit einem flüssigen Elektrolyten nach einem der Ansprüche 1 bis 6 durchtränkt ist.

8. Lithium-Akkumulator nach Anspruch 7, **dadurch gekennzeichnet, dass** das Titanoxid ein lithiiertes Titanoxid ist.

9. Lithium-Akkumulator nach Anspruch 8, **dadurch gekennzeichnet, dass** das Titanoxid Li₄Ti₅O₁₂ ist.

## Claims

1. A liquid electrolyte for a lithium battery comprising at least a lithium salt dissolved in a mixture of three non-aqueous organic solvents, **characterized in that** the mixture consists of:
- 33% to 49 volume % of propylene carbonate,
- 33% to 49 volume % of diethyl carbonate,
- and 2% to 34 volume % of ethyl acetate.

2. The electrolyte according to claim 1, **characterized in that** the mixture contains between about 10% and about 33 volume % of ethyl acetate.

3. The electrolyte according to claim 1, **characterized in that** the respective volume proportions of propylene carbonate, diethyl carbonate and ethyl acetate in the mixture are 1 :1 :1.

4. The electrolyte according to claim 1, **characterized in that** the respective volume proportions of propylene carbonate, diethyl carbonate and ethyl acetate in the mixture are 3 :3 :1.

5. The electrolyte according to claim 1, **characterized in that** the respective volume proportions of propylene carbonate, diethyl carbonate and ethyl acetate in the mixture are 7 :7 :1.

6. The electrolyte according to any one of claims 1 to 5, **characterized in that** the lithium salt is chosen from LiClO₄, LiAsF₆, LiPF₆, LiBF₄, LiR_{F}SO₃, LiCH₃SO₃, LiN(R_{F}SO₂)₂ and LiC(R_{F}SO₂)₃, R_{F} being a perfluoro-alkyl group comprising between 1 and 8 carbon atoms or a fluorine atom.

7. A lithium battery **characterized in that** it comprises:
- a positive electrode comprising LiFePO₄ or a derivative thereof as positive active material,
- a negative electrode comprising a titanium oxide or a derivative thereof as negative active material,
- and a separator arranged between the positive and negative electrodes and imbibed with a liquid electrolyte according to any one of claims 1 to 6.

8. The lithium battery according to claim 7, **characterized in that** the titanium oxide is a lithiated titanium oxide.

9. The lithium battery according to claim 8, **characterized in that** the titanium oxide is Li₄Ti₆O₁₂.
